Europäisches Patentamt

European Patent Office

Office européen des brevets

(11) Veröffentlichungsnummer: **0 373 347 B1**

# EUROPÄISCHE PATENTSCHRIFT

(45) Veröffentlichungstag der Patentschrift: **09.02.94**

(51) Int. Cl.5: **H02H 3/00**, H02H 3/05

(21) Anmeldenummer: **89120468.7**

(22) Anmeldetag: **06.11.89**

(54) Einrichtung zum Schutz eines elektrischen Betriebsmittels.

(30) Priorität: **16.12.88 CH 4649/88**

(43) Veröffentlichungstag der Anmeldung:
**20.06.90 Patentblatt 90/25**

(45) Bekanntmachung des Hinweises auf die
Patenterteilung:
**09.02.94 Patentblatt 94/06**

(84) Benannte Vertragsstaaten:
**CH DE FR GB LI**

(56) Entgegenhaltungen:
EP-A- 242 609
EP-A- 0 170 138
DE-A- 3 132 730

IEEE TRANSACTIONS ON POWER APPARA-
TUS AND SYSTEMS. vol. 99, no. 1, Januar
1980, NEW YORK US Seiten 344 - 351;
K.Tanaka: "Application of microprocessors
to the control and protection system at substation"

BROWN BOVERI REVIEW. vol. 71, no. 9/10,
September 1984, BADEN CH Seiten 400 - 404;
H.Ungrad: "A Modern Supervisory Control
and Protection Concept for Enhancing Power System Security"

IFAC Control Science and Technology ( 8th
Triennial World Congress) vol. 3 Aug 1981,
Oxford."Design concepts for a distributed
microprocessor- based transmission line
control and monitoring system"

(73) Patentinhaber: **ASEA BROWN BOVERI AG**
**Haselstrasse**
**CH-5401 Baden(CH)**

(72) Erfinder: **Braun, Uwe**
**Mühlrain 10**
**D-7258 Heimsheim(DE)**

**Beschreibung**

TECHNISCHES GEBIET

Bei der Erfindung wird ausgegangen von einer Einrichtung zum Schutz eines mittels Schaltstellen mit einem elektrischen Netz verbindbaren oder aus diesem Netz trennbaren Betriebsmittels nach dem Oberbegriff von Patentanspruch 1.

STAND DER TECHNIK

Mit diesem Oberbegriff nimmt die Erfindung auf einen Stand der Technik von Schutzeinrichtungen Bezug, wie er etwa in der DE-A-3132730 beschrieben ist. Die bekannte Schutzeinrichtung dient der Ueberwachung und führung eines Betriebsmittels, etwa einer Sammelschiene, eines elektrischen Energieversorgungsnetzes. Sie weist Strom-, Spannungs- und Schaltstellungssignale an Abgängen des Betriebsmittels aufnehmende und digitalisierende Messwerterfassungs-Einheiten auf sowie eine Datenverarbeitungseinheit. Die Datenerfassungseinheit enthält Mikroprozessorsysteme, welche in zwei Hierarchieebenen angeordnet sind. Ein in einer untergeordneten Hierarchiebene angeordnetes Mikroprozessorsystem verarbeitet und transformiert hierbei die in der Messwerterfassungseinheit digitalisierten Messsignale unter Echtzeitbedingungen, wohingegen ein in einer übergeordneten Hierarchieebene angeordnetes Mikroprozessorsystem hieraus mit reduzierter Datenmenge Schutzalgorithmen berechnet und Fehler bestimmt.

In EP-A-0 170 138 ist eine Schutzeinrichtung beschrieben, welche vorzugsweise dem Schutz eines als Sammmelschiene ausgebildeten Betriebsmittels dient. Abgänge der Sammelschiene werden jeweils von zwei Schutzrelais überwacht, welche über eine ODER-Verknüpfung auf eine den jeweiligen Abgang sichernde Schaltstelle wirken. Jedes der Schutzrelais arbeitet unabhängig von den übrigen Schutzrelais.

Aus EP-A-0 242 609 ist eine Kraftwerksleittechnik mit einer hierarchischen Struktur bekannt. Diese Kraftwerksleittechnik weist eine Einzelleitebene für die zu steuernden Komponenten des Kraftwerks und eine übergeordeten Prozessleitebene auf. Zwischen der Prozessleitebene und der Einzelleitebene sind eine Automatisierungsgeräte enthaltende Gruppenleitebene und eine Koppelprozessoren enthaltende Koppelleitebene angeordnet. Bei dieser Kraftwerksleittechnik wirken die Koppelprozessoren unabhängig von den übergeordneten Automatisierungsgeräten über Datenleitungen auf die Komponenten des Kraftwerkes. Durch diese Massnahme kann der Hardware-Aufwand für die Automatisierungsgeräte und damit für die ganze Kraftwerksleittechnik gering gehalten werden.

DARSTELLUNG DER ERFINDUNG

Die Erfindung, wie sie in Patentanspruch 1 angegeben ist, hat die Aufgabe, bei einer Schutzeinrichtung der eingangs genannten Art die Redundanz in Bezug auf die Datenübertragung und -verarbeitung zu erhöhen.

Die Schutzeinrichtung nach der Erfindung zeichnet sich durch hohe Betriebssicherheit aus, da selbst bei Ausfall eines der Netzknoten des Datentransportnetzes und/oder einer Ein- und Ausgabeeinheit noch deren vollständige Schutzfunktion gewährleistet ist. Hierbei kann durch geeignete Dimensionierungen der Leistungen der Rechner in einfacher Weise die fehlende Rechenleistung des am gestörten Netzknoten befindlichen Rechners wettgemacht werden. Zudem zeichnet sich die Schutzeinrichtung nach der Erfindung durch eine hohe Rechenleistung und wegen modularen Aufbaus durch beliebige Erweiterbarkeit und beliebig projektierbare Verfügbarkeit aus. Hierbei ist es von besonderem Vorteil, dass bei Ausfall eines oder mehrerer Netzknoten die Netztopologie dynamisch an die verbleibenden intakten Netzknoten angepasst werden kann.

KURZE BESCHREIBUNG DER ZEICHNUNG

Die Erfindung wird nachfolgend anhand von in der Zeichnung dargestellten Ausführungsbeispielen näher erläutert. Hierbei zeigen:

Fig.1   ein Prinzipschaltbild einer ersten Ausführungsform der Schutzeinrichtung nach der Erfindung, und

Fig.2   ein gegenüber dem Ausführungsbeispiel gemäss Fig.1 abgewandeltes Datentransport- und Verarbeitungsnetz einer zweiten Ausführungsform der Schutzeinrichtung nach der Erfindung.

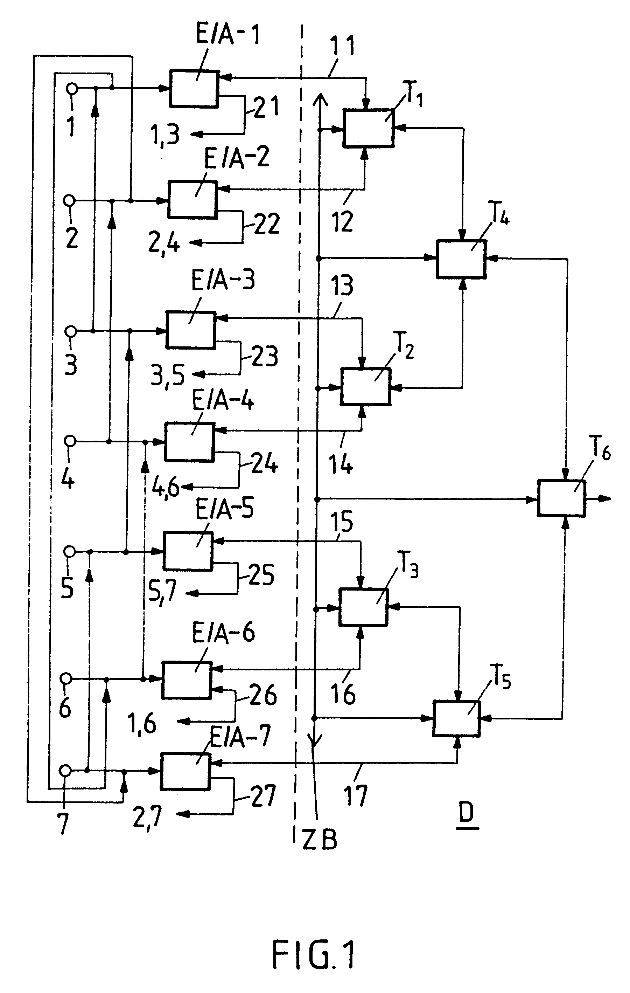

Die Schutzeinrichtung nach Fig.1 weist Ein- und Ausgabeeinheiten E/A-1,...,E/A-7 auf sowie ein mittels Uebertragungsleitungen 11,...,17 mit diesen Aus- und Ausgabeeinheiten verbundenes und in einem Schrank angeordnetes Datentransport- und Verarbeitungsnetz D auf.

Die Ein- und Ausgabeeinheiten E/A-1,..., E/A-7 sind im wesentlichen aus drei Blöcken aufgebaut, welche jeweils der analogen Eingabe von Messsignalen von Abgängen 1,...,7 eines elektrischen Betriebsmittels, beispielsweise einer Sammelschiene einer Schaltanlage, dienen sowie der binären Ein- und der binären Ausgabe von Daten.

Messsignale können am Abgang ermittelte Strom- und/oder Spannungssignale von Wandlern sein, können aber auch Stellungsmeldesignale von in den Abgängen befindlichen Schaltstellen sein. Jede Ein- und Ausgabe-Einheit z.B.E/A-3, erfasst die Messsignale von zwei oder mehr verschiedenen Abgängen, z.B. 3 und 5. Die erfassten analogen Messsignale werden in den Ein- und Ausgabeeinheiten digitalisiert und gegebenenfalls weiterverarbeitet, beispielsweise gefiltert.

Durch einen weiteren Block werden die digitalen Daten zur Uebertragung mittels der Leitungen 11,...,17 an Rechner $T_1$, $T_2$, $T_3$ und $T_5$ des Datentransport- und Verarbeitungsnetzes D ausgegeben. Dieser Block gibt ferner binäre Daten aus, welche über Leitungen 21,... ,27 an Auslöseorgane der an den Abgängen 1,...,7 befindlichen Schaltstellen geführt werden. Jeder dieser Blöcke, z.B. derjenige der Ein- und Ausgabeeinheit 3, kann hierbei entsprechend den aufgenommenen Messsignalen auf die Schaltstellen von zwei oder mehr Abgängen, z.B. 3,5 wirken.

Durch einen dritten Block werden digitale, vom Datentransport- und Verarbeitungsnetz D aus den digitalen Messdaten ermittelte und durch die Leitungen 11,...,17 übersandte Schutzdaten erfasst, welche, gegebenenfalls nach Verarbeitung in den Ein- und Ausgabeeinheiten E/A-1,...,E/A-7, als Auslösesignale an die Schaltstellen der Abgänge 1,...,7 ausgegeben werden.

Das Datentransport- und Verarbeitungsnetz ist aufgebaut aus hierarchisch gestuft angeordneten Rechnern $T_1$,...,$T_6$. Die Rechner $T_1$, $T_2$ und $T_3$ der hierarchisch untersten Stufe sind jeweils mit zwei der Ein- und Ausgabeeinheiten verbunden, so z.B. der Rechner $T_1$ mit den Ein- und Ausgabeeinheiten E/A-1 und E/A-2. Der Rechner $T_4$ einer hierarchisch höheren Stufe ist hingegen mit den Rechnern $T_1$ und $T_2$ und der Rechner $T_5$ dieser Stufe ist mit dem Rechner $T_3$ und unmittelbar mit der Ein- und Ausgabeeinheit E/A-7 verbunden. Ein Rechner $T_6$ der hierarchisch höchsten Stufe ist mit den Rechnern $T_4$ und $T_5$ verbunden. Darüber hinaus ist dieser Rechner $T_6$ über einen zentralen Bus ZB mit allen Rechnern $T_1$,...,$T_5$ des Datentransport- und Verarbeitungsnetzes D verbunden. Ersichtlich sind daher die Rechner nach Art eines binären Baumes, dessen Wurzeln vom Rechner $T_6$ gebildet werden, verbunden.

Die Rechner $T_1$,...,$T_6$ können auf Karten, z.B. im Doppeleuropaformat, angeordnet sein. Jede Karte kann vier, gegebenenfalls sechs, Rechner mit jeweils einem 128 kByte - 1 MByte aufweisende RAM und einem 128 kByte - 250 kByte aufweisenden EPROM versehen werden. Die Verbindungen der einzelnen Prozessoreinheiten auf der Karte und zwischen verschiedenen Karten wird vorzugsweise über Kreuzschienenschalter vorgenommen. Hierdurch ist in gewissen Grenzen eine variable Topologie des Datentransport- und Verarbeitungsnetzes D gewährleistet. So kann z.B. im Fall einer Störung das Datentransport- und Verarbeitungsnetz äusserst rasch in eine günstige Konfiguration umgeschaltet werden.

Die Verbindungen der Rechner $T_1$,...,$T_6$ untereinander können als abgeschirmte, verdrillte Leiterpaare oder Lichtleiter ausgebildet sein. Um den Aufwand für die Verkabelung gering zu halten, werden die Rechner auf einzelnen Platten oder über kurze, in einem gemeinsamen Schrank geführte Verdrahtungen miteinander verknüpft.

Die Wirkungsweise dieser Schutzeinrichtung ist wie folgt:

Die an jedem der Abgänge 1,...,7 auftretenden Messsignale werden nach Digitalisierung und gegebenenfalls Vorverarbeitung in den Ein- und Ausgabeeinheiten E/A-1,...,E/A-7 durch die Leitungen 11,...,17 zu den überwiegend einer Stufe niedriger Hierarchie angehörenden Rechnern $T_1$, $T_2$, $T_3$ und $T_5$ übertragen, wo sie einem ersten Verarbeitungsprozess unterzogen werden.

Die Uebertragung erfolgt seriell mit vorzugsweise 10 oder 20 MBit/s, d.h. bei einer zu erwartenden Datenblockgrösse von ca. 50 Byte pro Abgang und Abtastschritt nimmt die Uebertragung von einem Netzknoten zum nächsten etwa 50 $\mu$s bei 10 MBit/s in Anspruch.

In der zweiten Stufe, d.h. in den Rechnern $T_4$ und $T_5$, werden die von den Rechnern $T_1$, $T_2$ und $T_3$ sowie der Ein- und Ausgabeeinheit E/A-7 ausgegebenen Daten verarbeitet und die erhaltenen Ergebnisse an den Rechner $T_6$ der Stufe höchster Hierarchie weitergeleitet. Die Verarbeitung und der Transport der Daten erfolgt also in einem Zug.

Die Anzahl der Stufen im Datennetz ist proportional dem Zweierlogarithmus der Anzahl der gewünschten Abgänge, d.h. M = ENTIER (1d(N) + 0,99) mit M = Anzahl der Stufen, N = Anzahl der Abgänge, wobei ENTIER () für die Bildung des ganzzahligen Anteils steht.

Wenn man annimmt, dass die AD-Wandlung $t_w$ in den Ein- und Ausgabeeinheiten 100 $\mu$s benötigt, die Verarbeitung $t_r$ in den einzelnen Rechnern $T_1$,...,$T_6$ ebenfalls 100 $\mu$s und die Uebertragungszeit $t_c$ von Stufe zu Stufe 50 $\mu$s, so ergibt sich z.B. für eine Summenstromberechnung im beschriebenen Datennetz insgesamt eine Zeitspanne von 550 $\mu$s bis das Ergebnis im Netzknoten der höchsten Hierarchie vorliegt.

Bei einer Anzahl von M Stufen im Datentransport- und Verarbeitungsnetz D ergibt sich so allgemein eine Gesamtzeit $t_g$, die vom Abtasten der Messsignale bis zum Vorliegen des Endergebnisses im Rechner der höchsten hierarchischen Stufe vergeht, wie folgt:

$$t_g = t_w + M (t_r + t_c)$$

Bei dieser Datenverarbeitung gegebenenfalls gebildete Fehlersignale gelangen über das Datentransport- und Verarbeitungsnetz D an die Ein- und Ausgabeeinheiten und werden zur Bildung eines Auslösebefehls an die den Abgängen 1,...,7 zugeordneten Schaltstellen geführt.

Ist eine der Ein- und/oder Ausgabeeinheiten und/oder einer der Rechner defekt, so kann das Schutzgerät nach der Erfindung weiterhin seine Aufgabe erfüllen. Fällt z.B. die Ein- und Ausgabeeinheit E/A-3 aus, so werden die Messsignale des Abgangs 3 von der Ein- und Ausgabeeinheit E/A-1 erfasst und an den Rechner $T_1$ des Datentransport- und Verarbeitungsnetzes D übertragen und umgekehrt vom Datentransport- und Verarbeitungsnetz D ermittelte Fehlersignale über die Ein- und Ausgabeeinheit E/A-1 an die dem Abgang 3 zugeordnete Schaltstelle (und gegebenenfalls auch an die dem Abgang 1 zugeordnete Schaltstelle) gesandt.

Ist zusätzlich noch irgendein Rechner, z.B. $T_4$, im Datentransport-und Verarbeitungsnetz defekt, so ist der Datenfluss von den Rechnern $T_1$ und $T_2$ zum Rechner $T_6$ unterbrochen. Da $T_6$ wie alle anderen Rechner $T_1,...,T_5$ dialogfähig ist, kann $T_6$ nach relativ kurzer Zeit feststellen, dass $T_4$ ausge- fallen ist und kann dann über den zentralen Bus ZB $T_1$ und $T_2$ direkt abfragen bzw. Daten direkt über $T_1$ und $T_2$ an die Ein- und Ausgabeeinheiten E/A- 1,...,E/A-4 senden.

Der zentrale Bus ZB dient hierbei als systemweites Kommunikationsmedium. Er kann zugleich auch zum Beobachten von parallel auf den Rechnern ablaufenden Aufgaben benutzt werden. Dabei könnten durch einen temporär angeschlossenen weiteren Rechner der gesamte Betrieb im Datennetz überwacht, laufende Aufgaben gestoppt oder die Zustände der einzelnen Rechner abgefragt werden.

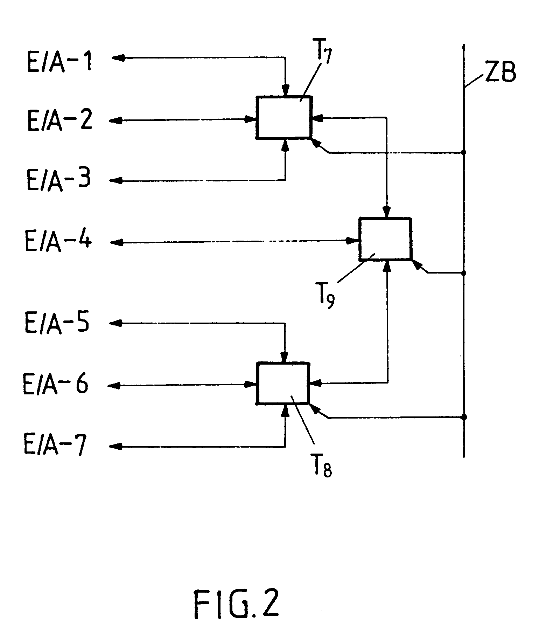

Besonders zu empfehlen ist es, jedem Rechner eine Steuereinheit, wie etwa eine solche, die unter der Bezeichnung 8031 von der Firma INTEL vertrieben wird, zuzuordnen. Eine solche Steuereinheit wird dann als Schnittstelle zum zentralen Bus ZB eingesetzt. Ein Vorteil dieser - beispielhaft in Fig.2 dargestellten - Ausbildung der Schutzeinrichtung nach der Erfindung besteht darin, dass nun an jedem Rechner eine Verbindungsmöglichkeit zu ei- nem weiteren Rechner $T_7,...,T_9$ oder zu einer wei- teren Ein- und Ausgabevorrichtung E/A-1,...,E/A-7 frei wird. Hierdurch werden die Herstellkosten des Schutzgerätes nach der Erfindung deutlich reduziert. Zudem ist sichergestellt, dass mehrere Aufgaben problemlos parallel im Schutzgerät nach der Erfindung ablaufen können. Ausserdem können nun die Rechner $T_7,...,T_9$ von Verwaltungsaufgaben für die Kommunikation, wie etwa die Stationserkennung, entlastet werden. Nur für den Fall, dass sie angesprochen werden, bekommen dies die Rechner über die Steuereinheit mitgeteilt.

## Patentansprüche

1. Einrichtung zum Schutz eines mittels Schaltstellen mit einem elektrischen Netz verbindbaren oder aus diesem Netz trennbaren Betriebsmittels, insbesondere einer Sammelschiene, mit einem Datentransport- und Verarbeitungsnetz (D),
   - das hierarchisch gestuft angeordnete und an einen gemeinsamen Bus (ZB) ange- schlossene Rechner ($T_1,...,T_9$) enthält,
   - dem an schaltstellengesicherten Abgängen (1,...,7) ermittelte Mess-Signale, als digitale Information über das Betriebsmittel, zugeführt werden,
   - das die zugeführten Mess-Signale digital verarbeitet und
   - das mit gegebenenfalls bei dieser Verarbeitung gebildeten Fehlersignalen auf die Schaltstellen wirkt,

   dadurch gekennzeichnet, dass die an jedem der Abgänge (1,...,7) des zu schützenden Be- triebsmittels erfassten Mess-Signale minde- stens von zwei voneinander unabhängigen Ein- und Ausgabeeinheiten (E/A-1,...,E/A-7) erfasst sind, dass die Rechner ($T_1,...,T_9$) des Daten- transport- und Verarbeitungsnetzes (D) mitein- ander verbunden sind nach Art eines binären Baumes, dessen Wurzel vom hierarchisch die höchste Stufe einnehmenden Rechner ($T_6$, $T_9$) gebildet wird und dass der gemeinsame Bus (ZB) als Verbindungsebene zwischen dem Rechner ($T_6$) der hierarchisch höchsten Stufe mit allen Rechnern ($T_1,...,T_5$) des Netzes (D) zusätzlich zu den Rechnerverbindungen zwi- schen jedem Rechner ($T_4$, $T_5$) einer hierar- chisch höheren Stufe mit den jeweils zugeord- neten Rechnern ($T_1$, $T_2$; $T_3$) einer hierarchisch unteren Stufe ausgeführt ist.

2. Einrichtung nach Anspruch 1 dadurch gekennzeichnet, dass jedem der Rechner ($T_7,T_8,T_9$) eine als Schnittstelle zum Bus (ZB) wirkende Steuereinheir zugeordnet ist.

## Claims

1. Device for protecting equipment, in particular a busbar, which by means of switching points can be connected to an electrical network or can be separated from said network, having a data transport and processing network (D),
   - which contains computers ($T_1,...,T_9$) which are arranged hierarchically in levels and connected to a common bus (ZB),
   - to which measuring signals determined at outlets (1,...,7) secured at switching points are fed as digital information on the equipment,

- which digitally processes the measuring signals fed, and
- which acts on the switching points with error signals possibly formed during this processing,

characterized in that the measuring signals detected at each of the outlets (1,...,7) of the equipment to be protected are detected at least by two mutually independent input and output units (E/A-1,...,E/A-7), in that the computers (T$_1$,...,T$_9$) of the data transmission and processing network (D) are connected to one another in the manner of a binary tree whose root is formed by the computer (T$_6$, T$_9$) which hierarchically assume the highest level, and in that the common bus (ZB) is designed as connecting level between the computer (T$_6$) of the hierarchically highest level with all the computers (T$_1$,...,T$_5$) of the network (D) in addition to the computer connections between each computer (T$_4$, T$_5$) of a hierarchically higher level with the respectively assigned computers (T$_1$, T$_2$; T$_3$) of a hierarchically low level.

2. Device according to Claim 1 characterized in that each of the computers (T$_7$, T$_8$, T$_9$) is assigned a control unit which acts as interface to the bus (ZB).

**Revendications**

1. Dispositif de protection d'un matériel d'exploitation qui peut être connecté à un réseau électrique ou déconnecté de celui-ci via des postes de commutation, en particulier d'une barre omnibus, avec un réseau de transfert et de traitement de données (D),
   - qui contient des ordinateurs (T$_1$, ..., T$_9$) agencés par étages hiérarchiques et connectés à un bus commun (ZB),
   - auquel des signaux de mesure captés aux sorties (1, ..., 7) protégées par les postes de commutation sont acheminés sous la forme d'informations numériques via le matériel d'exploitation,
   - qui traite numériquement les signaux de mesure acheminés, et
   - qui agit sur les postes de commutation avec des signaux d'erreur éventuellement formés lors de ce traitement,

   caractérisé en ce que les signaux de mesure captés sur chacune des sorties (1, ..., 7) du matériel d'exploitation à protéger sont captés au moins par deux unités d'entrée et de sortie indépendantes l'une de l'autre (E/A-1, ...,

E/A-7), les ordinateurs (T$_1$, ..., T$_9$) du réseau de transfert et de traitement de données (D) sont connectés l'un à l'autre sous la forme d'une espèce d'arbre binaire dont les racines sont formées par les ordinateurs (T$_6$, T$_9$) occupant hiérarchiquement l'étage le plus élevé et le bus commun (ZB) se présente sous la forme d'un plan de connexion entre l'ordinateur (T$_6$) de l'étage hiérarchiquement le plus élevé et tous les ordinateurs (T$_1$, ..., T$_5$) du réseau (D) en plus des connexions entre chaque ordinateur (T$_4$, T$_5$) d'un étage hiérarchiquement supérieur et les ordinateurs qui leur sont respectivement associés (T$_1$, T$_2$; T$_3$) d'un étage hiérarchiquement inférieur.

2. Dispositif selon la revendication 1, caractérisé en ce qu'une unité de commande jouant le rôle d'une interface avec le bus (ZB) est affectée à chacun des ordinateurs (T$_7$, T$_8$, T$_9$).

FIG.1

FIG.2